**Europäisches Patentamt**

**European Patent Office**

**Office européen des brevets**

(11) Veröffentlichungsnummer: **0 279 438 B1**

# EUROPÄISCHE PATENTSCHRIFT

(45) Veröffentlichungstag der Patentschrift:
03.04.91 Patentblatt 91/14

(51) Int. Cl.$^5$: **C01B 35/06**

(21) Anmeldenummer: **88102333.7**

(22) Anmeldetag: **18.02.88**

(54) **Verfahren zur Herstellung von reinem Bortrifluorid.**

(30) Priorität: **19.02.87 DE 3705283**

(43) Veröffentlichungstag der Anmeldung:
**24.08.88 Patentblatt 88/34**

(45) Bekanntmachung des Hinweises auf die
Patenterteilung:
**03.04.91 Patentblatt 91/14**

(84) Benannte Vertragsstaaten:
**DE ES FR GB**

(56) Entgegenhaltungen:
**DE-A- 1 667 393**
**DE-B- 1 159 911**

(73) Patentinhaber: **BASF Aktiengesellschaft**
**Carl-Bosch-Strasse 38**
**W-6700 Ludwigshafen (DE)**

(72) Erfinder: **Leutner, Bernd, Dr.**
**Taunusstrasse 17**
**W-6710 Frankenthal (DE)**
Erfinder: **Reich, Hans Heiner, Dr.**
**Kranichstrasse 11**
**W-6700 Ludwigshafen (DE)**

## Beschreibung

Die vorliegende Erfindung betrifft ein mehrstufiges Verfahren zur Herstellung von reinem $BF_3$ aus Hexafluorkieselsäure und Sauerstoffsäuren und/oder Oxiden des Bors.

Es ist bekannt, Bortrifluorid aus Calciumfluorid durch Umsetzen von Borsäure oder deren Salzen in wasserfreier Schwefelsäure herzustellen. Hierbei müssen jedoch relativ hohe Temperaturen von 180°C und mehr verwendet werden, die eine erhebliche Korrosion des Reaktormaterials nach sich ziehen. Als weiterer Nachteil ist zu werten, daß eine konzentrierte Schwefelsäure als Rückstand verbleibt, die die gesamte Menge an Einsatzcalcium in Form von sauren Calciumsulfaten enthält. Diese mit Calcium verunreinigte Schwefelsäure ist nur mit großen Schwierigkeiten zu entsorgen. Derartige Entsorgungsprobleme entfallen zwar bei einem weiteren, ebenfalls großtechnisch ausgeübten Verfahren, bei dem man Fluorsulfonsäure, $HSO_3F$, bzw. ein Gemisch aus $SO_3$ und HF mit $B_2O_3$ zur Reaktion bringt. Nachteilig bei diesem Verfahren ist jedoch der Eisatz von 100%iger Flußsäure, welche einen erheblichen Kostenfaktor darstellt. Außerdem müssen beim Arbeiten mit konzentrierter Flußsäure aufwendige Sicherheitsvorkehrungen hinsichtlich der Handhabung getroffen werden. Verätzungen mit Flußsäure heilen außerordentlich schlecht.

Ein dritter Weg zur Herstellung von $BF_3$ wird in der US-C 2 148 514 beschreiben. Hiernach wird die feste Verbindung $Na_2O(BF_3)_4$ mit Schwefelsäure zu gasförmigem $BF_3$, Natriumhydrogensulfat und wasserhaltiger Schwefelsäure umgesetzt. Anstelle der natriumhaltigen Verbindung kann auch eine ammoniumhaltige Verbindung mit der gleichartigen Zusammensetzung $(NH_4)_2O(BF_3)_4$ verwendet werden. Die schon aufgeführten Nachteile, wie die Verwendung von konzentrierter Flußsäure sowie die Probleme der Entsorgung der schwefelsäurehaltigen Rückstände, haften auch diesem Verfahren an.

Die US-C 2 196 907 grieft auf die gleiche Verbindung $(NH_4)_2O(BF_3)_4$ zurück. Entsprechend der Lehre dieser Patentschrift wird diese Ammoniumborfluorverbindung durch Umsetzen von Borsäure mit Ammoniumhydrogenfluorid hergestellt. Aber auch dieser Verfahrensweg ist umständlich, da erst ein zusätzliches Zwischenprodukt in fester Form hergestellt werden muß. Auch fallen bei Einsatz von Ammoniumborfluoridverbindung Rückstansschwefelsäuren an, die wegen der Gegenwart von Ammoniumionen nur unter Aufwand zu entsorgen sind. Eine Einleitung der neutralisierten Schwefelsäure in einem Vorfluter oder die Deponie von aus einer Neutralisation mit Calcium hydroxid herrührendem Gips ist häufig wegen des fischtoxischen bzw. grundwassergefährdenden Ammoniaks nicht möglich.

Gemäß der GB-C 463 545 bzw. der US-C 2 109 340 läßt sich aus festem Bortrioxid und 100%iger Flußsäure eine Verbindung der Zusammensetzung $H_3BO_2F_2$, die in der Patentschrift als Dihydroxidfluorborsäure, $HB(OH)_2F_2$, bezeichnet wird, herstellen. Aus dieser Verbindung oder auch aus dem Anlagerungsprodukt dieser Verbindung an $BF_3$ kann durch Zugabe von Schwefelsäure $BF_3$ gewonnen werden (Beispiele 3 und 5). Nachteilig bei dieser Herstellungsweise ist wiederum der Einsatz von teurer und nicht ungefährlicher wasserfreier Fluorwasserstoffsäure.

In der US-C 2 799 559 ist ein Verfahren zur Herstellung von Tetrafluoroborsäure beschrieben, das darin besteht, daß man Hexafluorokieselsäure mit Borsäure bei Temperaturen oberhalb von 70°C umsetzt, aus der Reaktionslösung die ausgefällte Kieselsäure abtrennt und die Reaktionslösung in zwei Stufen eindampft. Diese Patentschrift enthält jedoch keinerlei Hinweise für die Herstellung von Bortrifluorid.

Die DE-A 23 20 360 beschreibt ein Verfahren zur Herstellung von Kaliumtetrafluoroborat, bei dem ebenfalls Hexafluorokieselsäure mit fester Borsäure im Molverhältnis 1 : 1,8 bis 1 : 1,25 unter Erhitzen auf 60 bis 100°C umgesetzt, aus der Reaktionslösung die entstandene Kieselsäure abgetrennt und das abgekühlte Filtrat mit der für die Bildung von Tetrafluoroborsäure stöchiometrisch erforderlichen Menge an Fluorwasserstoffsäure versetzt wird. Anschließend wird durch Zugabe eines Kaliumsalzes Kaliumtetrafluoroborat ausgefällt, abfiltriert und getrocknet. Auch dieses Verfahren vermittelt keine Lehre für eine Herstellung von Bortrifluorid.

Der vorliegenden Erfindung lag die Aufgabe zugrunde, ein Verfahren zur Herstellung von praktisch reinem Bortrifluorid aus kostengünstigen Rohstoffen bereitzustellen, das hohe Ausbeuten an Bortrifluorid liefert, geringe Materialprobleme verursacht und bei dem die verfahrensinherenten Koppelprodukte keine Entsorgungsprobleme bereiten.

Es wurde nun gefunden, daß diese Aufgabe dadurch gelöst werden kann, daß man Hexafluorokieselsäure mit Sauerstoffsäuren und/oder Oxiden des Bors in einem Molverhältnis Bor : $H_2SiF_6$ von 1,5 bis 2,2 umsetzt,

die ausgefallene Kieselsäure von der Reaktionsmischung abtrennt,

die Reaktionsmischung soweit eindampft, daß die Summe an Bor und Fluor mindestens 49% (m/m) und der Gehalt an Hexafluorkieselsäure, berechnet als $SiO_2$, maximal 0,25% (m/m) beträgt,

bei einem Fluor-Bor-Atomverhältnis in der resultierenden Reaktionsmischung von > 3,6 durch Zugabe von weiteren Sauerstoffsäuren und/oder Oxiden des Bors auf ≤ 3,6 einstellt,

der Reaktionsmischung eine solche Menge an Oleum zusetzt, daß mindestens 80% des in ihr enthaltenden Wassers zu Schwefelsäure umgesetzt wird und

aus der mit Oleum versetzten Reaktionsmischung Bortrifluorid durch Erwärmen auf Temperaturen oberhalb von 80°C austreibt.

In der ersten Stufe des erfindungsgemäßen Verfahrens – der Herstellung von Hydroxifluoroborsäuren aus Kieselflußsäure und einer Borsauerstoffsäure, z.B. $HBO_2$ oder $H_3BO_3$ und/oder Boroxiden – setzt man metallionenfreie oder metallionenarme Ausgangsprodukte ein. Wird z.B. statt Borsäure ein Metallsalz der Borsäure, wie z.B. Borax, $Na_2B_4O_7 \times 10 \, H_2O$, oder Colemanit, $CaB_3O_4(OH)_3 \times H_2O$, verwendet, so läßt sich auf dem beschriebenen Wege zwar ebenfalls $BF_3$ gewinnen. Es wurde allerdings gefunden, daß die Ausbeuten an $BF_3$ in Gegenwart von Metallionen zurückgehen bzw. daß zur Erzielung einer hohen $BF_3$-Ausbeute die Austreibungstemperaturen für $BF_3$ bei der Umsetzung von aufkonzentrierter Hydroxifloroborsäure und Oleum auf ca. 160°C und darüber angehoben werden müssen, wodurch Korrosionsprobleme auftreten.

Die Kieselflußsäure läßt sich in jeder beliebigen Konzentration einsetzen. Um jedoch in der Eindampfstufe die abzudestillierende Wassermenge und damit den Energieaufwand nicht übermäßig ansteigen zu lassen, ist es zweckmäßig, eine möglichst hochkonzentrierte Säure zu verwenden. Konzentrationen zwischen 20% und etwa 30% $H_2SiF_6$ haben sich als besonders vorteilhaft erwiesen.

Das Verfahren kann so durchgeführt werden, daß man zu der vorgelegten Hexafluorokieselsäure die gewünschten Mengen an Bor-Sauerstoffsäuren und-/oder Bortrioxid zugibt. Die Umsetzung kann bei Temperaturen von 0°C bis zum Siedepunkt der Reaktionsmischung, der bei 100 bis 105°C liegt, durchgeführt werden. Zur Abkürzung der Reaktionsdauer wählt man zweckmäßig Temperaturen von oberhalb 60°C. Bei Einsatz von Hexafluorokieselsäuren mit einem $H_2SiF_6$-Gehalt von oberhalb von 20% (m/m) ist es jedoch zweckmäßig, etwa 20 bis 70% der insgesamt benötigten Menge vorzulegen und in diese Vorlage die gesamte Borverbindung bei Temperaturen unterhalb von 60°C, vorzugsweise bei 15 bis 30°C, einzutragen, die Mischung dann, falls gewünscht, auf Temperaturen oberhalb von 60°C bis zu deren Siedepunkt bei Normaldruck zu erwärmen und danach die restliche Hexafluorokieselsäure zuzugeben. Diese Arbeitsweise hat den Vorteil, daß sich keine größeren Mengen an Siliciumtetrafluorid verflüchtigen, was zu Ausbeuteverlusten und Problemen bei der nachfolgenden Kühlung und Reinigung der Abgase führt.

Nach Zusammengabe der Reaktionskomponenten sollte die Reaktionsmischung zur Erzielung eines weitgehenden Umsatzes an Kieselflußsäure in einem technisch vertretbaren Zeitrahmen bei Temperaturen von mehr als 60°C, zweckmäßigerweise bei ca. 90°C bis zum Siedepunkt etwa 20 min oder länger gerührt werden. Darauf wird die Kieselsäure von der Mutterlauge abgetrennt, was zweckmäßigerweise in der Wärme geschieht, und von der anhaftenden Mutterlauge ausgewaschen. Eine Gegenstromwäsche ist vorteilhaft. Für den Verfahrensschritt der Fest-Flüssig-Trennung können alle bekannten Verfahren und Apparate eingesetzt werden, wie z.B. Filterpressen, Dekantier- und Schubzentrifugen, Trommel-, Band- oder Tellerfilter und dgl. mehr. Der Feststoffgehalt im ausgewaschenen Filterkuchen liegt meist bei ca. 20% (m/m) ; er kann aber auch zwischen ca. 15% und 35% schwanken. Der ausgewaschene $SiO_2$-Filterkuchen läßt sich vorteilhaft bei der Aufkonzentrierung von Phosphorsäure einsetzen, wodurch die Entfluorierung verbessert wird. Gleichfalls ist eine Verwendung für die Hydrothermalsynthese von Silikaten, wie Wasserglas und Zeolithen, z.B. vom Typ A, Y oder ZSM, gut möglich.

Die abgetrennte Mutterlauge, welche aus Hydroxifluoroborsäuren der mittleren Zusammensetzung $HB(OH)_xF_{4-x}$ mit x = ca. 0,2 – ca. 1 und einer gewissen, mit den Hydroxifluoroborsäuren im Gleichgewicht befindlichen Menge von Kieselflußsäure besteht, wird in einer dritten Prozeßstufe durch Eindampfen aufkonzentriert. Hierbei tritt gleichzeitig eine Abreicherung von $H_2SiF_6$ ein, was auf eine parallel mit der Wasserdestillation erfolgende Abspaltung an gasförmigem $SiF_4$ erkärt werden kann. Die Aufkonzentrierung sollte mindestens soweit erfolgen, daß die Summe der Fluor- und Borkonzentration bei mindestens 49% (m/m) und der Gehalt an Hexafluorokieselsäure, berechnet als $SiO_2$, bei maximal 0,25% (m/m) liegt. Dies entspricht $H_2SiF_6$-Konzentrationen von maximal etwa 0,4% (m/m) $H_2SiF_6$.

Falls die resultierende Reaktionsmischung nach der Eindampfung ein Fluor-Bor-Atomverhältnis von >3,6 aufweist, ist es wesentlich, dieses durch Zugabe von Borsauerstoffsäuren und/oder Bortrioxid auf Werte ≤ 3,6, vorzugsweise 3 bis 3,4, einzustellen. Bei höheren Atomverhältnissen kann das entstehende Bortrifluorid mit Fluorwasserstoff verunreinigt sein.

Anschließend wird die Reaktionsmischung mit einer solchen Menge an Oleum versetzt, daß mindestens 80% des in ihr enthaltenden Wassers zu Schwefelsäure umgesetzt wird. Die Wassermenge ergibt sich aus der Differenz der Menge des Hydroxifluoroborsäure-Konzentrates und der Summe der im Hydroxifloroborsäure-Konzentrat enthaltenen Fluor- und Bormenge, wobei eventuell noch vorhandene Hexafluorokieselsäure wegen ihrer geringen Menge unberücksichtigt bleibt. Für die Berechnung der Oleummenge wird die Reaktion

$$H_2O + SO_3 \rightarrow H_2SO_4$$

zugrundegelegt. Ein gemäß dieser Gleichung eingesetzter stöchiometrischer Unterschuß von bis zu 20%

$SO_3$ bringt keine wesentliche Verluste an $BF_3$-Ausbeute mit sich und ist daher wirtschaftlich von Vorteil. Größere Unterschüsse sind zwar auch möglich, führen aber, wenn sie nicht durch andere Maßnahmen, wie z.B. durch erhöhte Reaktionstemperaturen von mehr als 150°C oder durch Strippmaßnahmen mit inerten Gasen, ergänzt werden, zu verringerten Ausbeuten an $BF_3$.

Die Umsetzung von Hydroxifluorborsäure mit Oleum kann chargenweise oder kontinuierlich durchgeführt werden. Eine kontinuierliche Reaktionsführung besitzt den Vorteil der gleichmäßigen Gasentwicklung, der besseren Regelbarkeit, der kleineren Reaktionsapparate und der Möglichkeit, über Gegenstromwärmetauscher einen geringeren Verbrauch an Wärmeenergie zu erzielen.

Die bei der Umsetzung von Hydroxifluoroborsäure mit Oleum anfallende Rückstandsschwefelsäure enthält nur noch geringe Anteile an Fluorid und Bor, so daß diese direkt und ohne weitere Aufarbeitung für die Herstellung von Nitriersäuren oder auch von Düngemitteln, sei es für die Gewinnung von Superphosphat oder von Phosphorsäure, eingesetzt werden kann.

Bei den in den folgenden Beispielen genannten Prozentangaben handelt es sich, falls nicht anders vermerkt, um Masseprozente.

Beispiel 1

In einem heizbaren Gefäß wurden zu 670 g einer Kieselflußsäure mit einem Gehalt an 30,1% $H_2SiF_6$ unter Rühren 247 g Borsäure, $H_3BO_3$, bei 25°C zugesetzt. Die Mischung wurde auf 98°C aufgeheizt und darauf innerhalb von 20 min gleichmäßig mit weiteren 447 g Kieselflußsäure der obigen Konzentration versetzt. Das Molverhältnis von B zu $H_2SiF_6$ liegt damit bei 1,71 : 1. Nach 1 h Nachreaktionszeit bei 98°C wurde das ausgefallene $SiO_2$ heiß abfiltriert und der Filterkuchen dreimal mit hewels 365 ml heißem Wasser nachgewaschen. Erstfiltrat und Waschwässer wurden vereinigt.

1 622 g der mit den Waschwässern vereinigten Mutterlauge wurden bei Normaldruck in einem Kolben aus Polytetrafluorethylen auf 442 g eingedampft, wobei die Anfangstemperatur 102°C und die Endtemperatur 158°C betrug. Es resultierte eine Hydroxifluoroborsäure mit 49,7% F und 8,63% B, was einem Atomverhältnis von 3,27 F : 1 B entspricht, sowei einem $SiO_2$-Gehalt von 0,03%.

100 g der konzentrierten Fluoroborsäure wurden in einem 1 l-Kolben aus Polytetrafluoroethylen vorgelegt und vorsichtig mit 280 g Oleum, welches 65% $SO_3$ enthielt (entsprechend einem Molverhältnis von $H_2O : SO_3$ von 1 : 0,98), versetzt. Beim Aufheizen auf 130°C innerhalb von 80 min entwickelten sich 19,0 l $BF_3$. Hieraus errechnet sich eine auf die ursprünglich eingesetzte Borsäure bezogene Ausbeute von rund 87% und entsprechend eine F-Ausbeute von 75%.

Das $BF_3$-Gas erwies sich mit 0,06% (V/V) $SiF_4$ als sehr rein.

Beispiel 2

Analog zum Beispiel 1 wurden insgesamt 2,23 g Kieselflußsäure (30,1%ig) mit 0,495 kg Borsäure umgesetzt (entsprechend einem Molverhältnis Bor : $H_2SiF_6$ von 1,72 : 1). Es wurde 2 h bei 98°C nachreagieren gelassen, heiß von der ausgefallenen Kieselsäure abfiltriert und mit 2,9 l Wasser gewaschen.

Von den erhaltenen 3,7 kg an vereinigter Mutterlauge und Waschwasser wurden 3,46 kg auf 1,02 kg eingedampft bei einer Sumpfendtemperatur von 140°C. Es resultierte eine konzentrierte Hydroxifluoroborsäure mit 42% F und 7,4% B, was einem Atomverhältnis von 3,22 F : 1 B entspricht, sowie einem $SiO_2$-Gehalt von 0,04%.

0,1 kg der aufkonzentrierten Hydroxifluoroborsäure wurden mit 0,35 kg 65%igem Oleum (entsprechend einem Molverhältnis 1 $H_2O$ : 1,01 $SO_3$) langsam und gleichmäßig versetzt. Nach Beendigung der Oleumzugabe, die etwa eine halbe Stunde benötigte, wurde auf 120°C aufgeheizt. Es entstanden 16,4 l an gasförmigem Bortrifluorid. Hieraus errechnet sich eine Gesamtborausbeute von 93% und eine Gesamtflorausbeute von 80%.

Das $BF_3$-Gas enthielt nur 0,1% (V/V) $SiF_4$.

Beispiel 3

Nach der gleichen Verfahrensweise wie in Beispiel 1 wurden 2000 g einer 24%igen Kieselflußsäure vorgelegt, 348 g Boroxid, $B_2O_3$, unter Rühren hinzugesetzt und auf 90°C aufgeheizt. Darauf wurden weitere 1750 g an Kieselflußsäure (24%ige) zugefügt. Hieraus errechnet sich ein Molverhältnis der Reaktionspartner von 1,60 B : 1 $H_2SiF_6$. Es wurde nach 3 h Reaktionszeit vom $SiO_2$ abfiltriert und gewaschen. Das mit den Waschwässern vereinigte Filtrat wurde durch Eindampfen auf 46% F und 7,6% B (entsprechend einem Atomverhältnis von 3,44 Fluor : 1 Bor) aufkonzentriert. Das Konzentrat wies einen $SiO_2$-Gehalt von 0,11% auf.

100 g der aufkonzentrieten Hydroxifluoroborsäure wurden mit 2,83 g an 65%igen Oleum (entsprechend einem Molverhältnis von 1 $H_2O$ : 0,89 $SO_3$) bei 120°C versetzt. Nach Zugabe des Oleums wurde zur Austreibung der letzten Mengen an $BF_3$-Gas auf 150°C erhitzt. Es wurden rund 15 l Bortrifluorid-Gas mit nur 0,3% (V/V) an $SiF_4$ erhalten.

Beispiel 4

Zur 600 g $H_2SiF_6$ (24%ig) fügte man 175 g Metaborsäure, $HBO_2$, bei Raumtemperatur hinzu und erhitzte auf 95 bis 100°C. Oberhalb von 80°C wurde damit begonnen, weitere 663 g H$_2$SiF$_6$ (24%ig) innerhalb einer Stunde hinzuzusetzen. Nach nochmals 0,5 h Ausrührzeit bei 95 bis 100°C wurde von der ausgefallenen Kieselsäure abfiltriert. Aus den Einwaagen errechnet sich ein Molverhältnis der Reaktionspartner von 1,90 B : 1 H$_2$SiF$_6$.

Die Mutterlauge wurde im Vakuum (20 mm Hg) bis zu einem Fluorgehalt von 52,4% und einem Borgehalt von 9,6% eingeengt, entsprechend einem Atomverhältnis von 3,158 Fluor : 1 Bor. Das Konzentrat enthielt < 0,01% SiO$_2$.

Zu 50 g der aufkonzentrierten Lösung gab man bei 100°C innerhalb von 15 min 120 g Oleum (65%ig) (entsprechend einem Molverhältnis von 1 H$_2$O : 0,90 SO$_3$) hinzu und erhitzte darauf auf 140°C. Es entstanden 10 l Bortrifluorid, bei dem SiF$_4$-Verunreinigungsspuren [IR-spektroskopisch] nicht mehr nachweisbar waren. [Die Nachweisgrenze dieser Bestimmungsmethode lag unter 0,04% (V/V).]

Beispiel 5

Der Versuch 3 wurd wiederholt mit der einzigen Abänderung, daß die Reaktionstemperatur bei der Umsetzung der Kieselflußsäure mit Boroxid von 90°C auf 40°C zurückgenommen und dafür die Reaktionszeit von 3 h auf 12 h verlängert wurde. Es ergaben sich keine bemerkbaren Unterschiede.

## Ansprüche

1. Verfahren zur Herstellung von reinem Bortrifluorid, dadurch gekennzeichnet, daß man Hexafluorokieselsäure mit Sauerstoffsäuren und/oder Oxiden des Bors in einem Molverhältnis Bor : H$_2$SiF$_6$ von 1,5 bis 2,2 umsetzt,

die ausgefallene Kieselsäure von der Reaktionsmischung abtrennt,

die Reaktionsmischung soweit eindampft, daß die Summe an Bor und Fluor mindestens 49% (m/m) und der Gehalt an Hexafluorkieselsäure, berechnet als SiO$_2$, maximal 0,25% (m/m) beträgt.

bei einem Fluor-Bor-Atomverhältnis in der resultierenden Reaktionsmischung von > 3,6 durch Zugabe von weiteren Sauerstoffsäuren und/oder Oxiden des Bors auf ≤ ,6 einstellt,

der Reaktionsmischung eine solche Menge an Oleum zusetzt, daß mindestens 80% des in ihr enthaltenden Wassers zu Schwefelsäure umgesetzt wird und

aus der mit Oleum versetzten Reaktionsmischung Bortrifluorid durch Erwärmen auf Temperaturen oberhalb von 80°C austreibt.

2. Verfahren nach Anspruch 1, dadurch gekennzeichnet, daß die Hexafluorokieselsäure eine Konzentration von mehr als 20% (m/m) aufweist.

3. Verfahren nach Ansprüchen 1 und 2, dadurch gekennzeichnet, daß man die Umsetzung der Hexafluorokieselsäure mit den Bor-Sauerstoffsäuren und-/oder Oxiden des Bors bei Temperaturen oberhalb von 60°C durchführt.

4. Verfahren nach den Ansprüchen 1 bis 3, dadurch gekennzeichnet, daß man 20 bis 70% der insgesamt benötigten Hexafluorokieselsäure mit den Borkomponenten bei Temperaturen von 15 bis 30°C umsetzt und danach bei Temperaturen von oberhalb von 60°C die restliche Hexafluorokieselsäure zusetzt.

## Revendications

1. Procédé de préparation de trifluorure de bore pur, caractérisé en ce qu'on fait réagir de l'acide hexafluorosilicique avec des acides oxygénés et/ou des oxydes du bore dans un rapport molaire bore : H$_2$SiF$_6$ de 1,5 à 2,2,

on sépare l'acide silicique précipité du mélange réactionnel,

on évapore le mélange réactionnel jusqu'à ce que la somme du bore et du fluor soit d'au moins 49% (m/m) et la teneur en acide hexafluorosilicique, exprimé en SiO$_2$, soit au plus de 0,25% (m/m),

en cas d'un rapport atomique fluor/bore dans le mélange réactionnel résultant de > 3,6, on l'amène à ≤ 3,6 par addition d'acides oxygénés et/ou d'oxydes du bore supplémentaires,

on ajoute au mélange réactionnel une quantité d'oléum telle qu'au moins 80% de l'eau qu'il contient seront transformés en acide sulfurique et

on extrait le trifluorure de bore du mélange réactionnel additionné d'oléum par chauffage à des températures supérieures à 80°C.

2. Procédé selon la revendication 1, caractérisé en ce que l'acide hexafluorosilicique présente une concentration de plus de 20% (m/m).

3. Procédé selon l'une ou l'autre des revendications 1 et 2, caractérisé en ce qu'on mène la réaction de l'acide hexafluorosilicique avec les acides oxygénés.

## Claims

1. A process for preparing pure boron trifluoride, which comprises reacting hexafluorosilicic acid with an oxygen acid and/or oxide of boron in a molar ratio of boron : H$_2$SiF$_6$ of from 1.5 to 2.2,

separating the precipitated silica from the reaction mixture,

evaporating the reaction mixture to such an extent that the total amount of boron and fluorine is not less than 49% (m/m) and the hexafluorosilicic acid content, calculated as SiO$_2$, is not more than 0.25% (m/m),

bringing the fluorine :boron atomic ratio in the resulting reaction mixture, if > 3.6, to ≤ 3.6 by adding a further oxygen acid and/or oxide of boron, adding to the reaction mixture such an amount of oleum that not less than 80% of the water present therein is converted to sulfuric acid, and heating the reaction mixture with the oleum to above 80°C to expel boron trifluoride.

2. A process as claimed in claim 1, wherein the hexafluorosilicic acid has a concentration of more than 20% (m/m).

3. A process as claimed in either of claims 1 and 2, wherein the reaction of the hexafluorosilicic acid with the oxygen acid and/or oxide of boron is carried out at above 60°C.

4. A process as claimed in any of claims 1 to 3, wherein from 20 to 70% of the total amount of hexafluorosilicic acid required is reacted with the boron component at from 15 to 30°C and the remainder of hexafluorosilicic acid is then added at above 60°C. et/ou les oxydes de bore à des températures supérieures à 60°C.

4. Procédé selon l'une quelconque des revendications 1 à 3, caractérisé en ce qu'on fait réagir 20 à 70% de l'acide hexafluorosilicique nécessaire en tout avec les composants du bore à des températures de 15 à 30°C puis on ajoute le reste de l'acide hexafluorosilicique à des températures supérieures à 60°C.